# FASCICULE DE BREVET EUROPEEN

(11) **EP 1 275 813 B1**
(45) Date de publication et mention de la délivrance du brevet: **02.01.2008**
(21) Numéro de dépôt: 02405503.0
(22) Date de dépôt: 19.06.2002
(51) Int. Cl.: E06B 9/68, E06B 9/307

(54) **Dispositif d'entrainement manuel de store comprenant un réducteur epicycloidal**
Manuelle Antriebsvorrichtung für einen Vorhang mit epizyklischem Untersetzungsgetriebe
Manual drive system for shutter with epicycle reduction gear

(30) Priorité: 26.06.2001 FR 0108411
(43) Date de publication de la demande: 15.01.2003
(73) Titulaire: Somfy SAS, 74300 Cluses (FR)
(72) Inventeur: Lagarde, Eric Paul, 74700 Sallanches (FR); Le Ru, Yann, 74300 Thyez (FR)
(74) Mandataire: Bugnion Genève

(56) Documents cités:
- EP-A- 0 372 803

## Description

L'invention concerne un dispositif d'entraînement manuel de store, volet roulant ou similaire, équipé d'un arbre d'enroulement, comprenant un réducteur épicycloïdal entre un moyen d'entraînement manuel et l'arbre d'enroulement du store.

Un tel dispositif d'entraînement est connu du brevet EP 0 372 803 où il est utilisé pour l'entraînement d'un store vénitien au moyen d'une chaîne entraînant une roue à chaîne solidaire du planétaire d'un réducteur épicycloïdal simple comprenant une couronne fixe et un jeu de satellites porté par un porte-satellites constituant la sortie du réducteur. Le rapport de réduction du réducteur est par exemple de 3 à 1.

Une des propriétés intéressantes du réducteur épicycloïdal ou planétaire est l'absence de résultante radiale de transmission et par conséquent moins de contrainte sur les composants.

Dans le document EP 0 372 803, le caractère compact du réducteur planétaire est mis en évidence. Ce caractère compact est toutefois relatif. Dans le dispositif décrit dans le document susmentionné, le réducteur est monté à l'extérieur du carter abritant l'arbre d'enroulement du store vénitien. La disposition du mécanisme réducteur à l'extérieur du carter est non seulement peu esthétique, mais elle nécessite en outre la fabrication de deux produits différents, l'un destiné à être manoeuvré à droite et l'autre destiné à être manoeuvré à gauche. C'est pourquoi il est préférable que le mécanisme réducteur puisse trouver place à l'intérieur du carter de telle sorte que l'on n'a plus d'appendice latéral et que le carter peut être monté dans un sens ou dans l'autre, avec le mécanisme réducteur à son extrémité gauche ou droite.

L'expérience montre en outre que pour ce type d'utilisation un rapport de réduction inférieur à 3 est préférable car il confère un certain agrément d'utilisation en raison du déplacement du store que l'on obtient par rapport à l'effort et au mouvement qu'il requiert de l'utilisateur.

Si on désire loger le réducteur à l'intérieur du carter, on est immédiatement confronté à des problèmes de réalisation. En effet, étant donné que l'on désire obtenir un faible rapport de réduction, on est conduit à réduire la différence des diamètres primitifs du planétaire et de la couronne et par conséquent de réduire le diamètre primitif des satellites. Or, si on réduit le diamètre primitif des satellites, il faut soit réduire le nombre de leurs dents', ce qui n'est pas possible à l'infini, soit diminuer leur module, ce qui conduit à les fragiliser. Pour conserver un nombre de dents acceptable sur les satellites, on est alors contraint d'augmenter le nombre de dents de la couronne et par conséquent d'augmenter l'encombrement général du mécanisme. Ainsi, pour un train planétaire du type décrit et représenté dans le document EP 0 372 803, le rapport de 3 à 1 mentionné peut être obtenu au moyen d'un planétaire comportant 20 dents, de satellites à 10 dents et d'une couronne à 40 dents. Pour passer à un rapport de 2,7 en conservant des satellites à 10 dents, le planétaire doit présenter 29 dents et la couronne 49 dents, soit pour un module de 1, une augmentation du diamètre extérieur du mécanisme de 9 mm.

Le problème est donc d'obtenir un rapport de transmission faible avec un diamètre extérieur réduit, par exemple un diamètre de 20 mm.

Les réducteurs planétaires ou épicycloïdaux sont généralement utilisés en raison des rapports élevés de réduction qu'il est possible d'obtenir au moyen de tels réducteurs. En ce qui concerne les connaissances de l'homme du métier dans le domaine des engrenages, et plus particulièrement des réducteurs planétaires, on peut se référer à l'ouvrage très complet de G. Henriot «Engrenages, conception, fabrication, mise en oeuvre», 7^{ème} édition. Au chapitre 13.3, pages 545 à 553, Henriot traite des trains composés. Un train composé est formé de la juxtaposition de deux trains planétaires simples. Henriot montre les 12 combinaisons qu'il est possible d'obtenir au moyen de deux trains planétaires simples de type I, mais il est aussi possible d'obtenir 12 combinaisons en combinant des trains planétaires simples de type II, III ou IV ou en combinant les types entre eux. Pour chaque combinaison il y a donc 10 possibilités de combiner les types, soit I-I, I-II, I-III, I-IV, II-II, etc., ce qui représente 120 combinaisons. Selon le choix de l'entrée, du point fixe et de la sortie du réducteur, chaque combinaison peut donner naissance à 6 couplages différents, ce qui donne un total de 720 possibilités.

Surmontant les préjugés existants en ce qui concerne la contradiction existant entre les conditions posées, à savoir un rapport de réduction inférieur à 3 et un faible diamètre, l'inventeur s'est demandé s'il n'existait pas une combinaison possible de trains planétaires simples permettant de satisfaire lesdites conditions et présentant une architecture simple de nature à faciliter sa fabrication et à en limiter le coût.

Au bout de nombreux calculs et d'opérations de sélection, il a été trouvé que deux réducteurs permettant d'atteindre les objectifs visés. Ces deux réducteurs présentent des caractéristiques communes, à savoir le fait que les trains planétaires simples sont de type I, que les planétaires des deux trains planétaires simples sont liés et qu'une couronne est fixe et l'autre rotative.

Pour mémoire, un train planétaire simple de type I est constitué d'un planétaire, d'un porte-satellites et de ses satellites et d'une couronne.

Plus précisément, le dispositif d'entraînement manuel selon l'invention est caractérisé en ce que le réducteur épicycloïdal est constitué de la juxtaposition de deux trains planétaires simples de type I dont les planétaires sont liés mécaniquement de manière à être entraînés simultanément à la même vitesse et dont la couronne du premier train planétaire est fixe et l'autre couronne est rotative, et en ce qu'il présente un rapport de réduction inférieur ou égal à 3.

Dans l'un des modes d'exécution, les satellites des deux trains sont portés par un porte-satellites commun constituant l'entrée du réducteur et la couronne du second train constitue la sortie du réducteur.

Dans l'autre mode d'exécution, le porte-satellites du premier train planétaire est solidaire de la couronne du second train et le porte-satellites du second train constitue la sortie du réducteur, l'entrée se faisant sur les planétaires.

Pour un diamètre extérieur du réducteur de 20 mm, il est possible, dans les deux modes d'exécution, d'obtenir un rapport de réduction inférieur à 3, par exemple 2,6.

Le dessin annexé représente les deux modes d'exécution de l'invention.

La figure 1 représente le premier mode d'exécution.

La figure 2 représente le second mode d'exécution.

La représentation schématique des réducteurs est la représentation utilisée par G. Henriot.

On a représenté qu'une moitié des portes-satellites et des couronnes relativement à l'axe du réducteur.

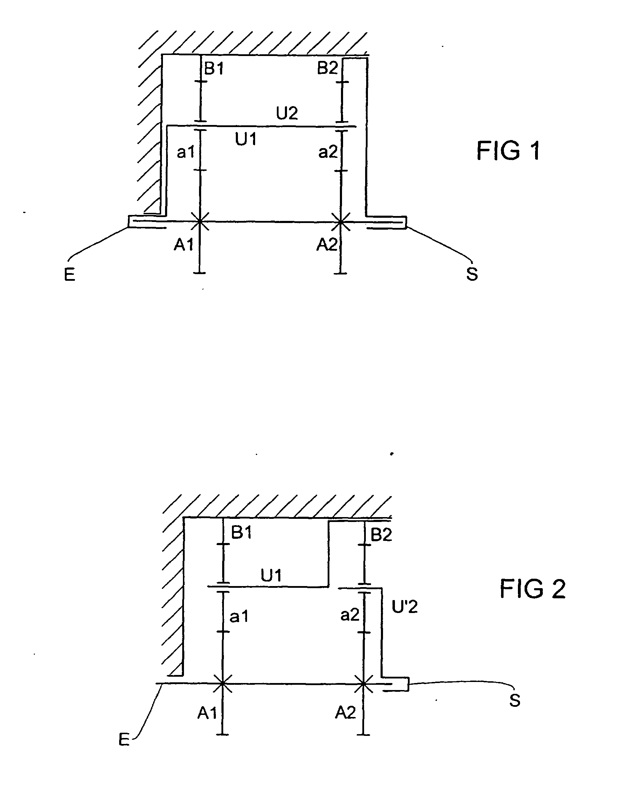

Dans le mode d'exécution représenté à la figure 1, le premier train planétaire simple est constitué du planétaire A1, de la couronne B1, du porte-satellites U1 avec ses satellites a1. Le second train planétaire simple est constitué du planétaire A2, de la couronne B2, du porte-satellites U2 avec ses satellites a2. Les planétaires A1 et A2 sont liés mécaniquement rigidement de telle sorte qu'ils tournent à la même vitesse. Ils sont bien entendu coaxiaux. Les portes-satellites U1 et U2 sont également liés de manière à constituer un porte-satellites unique. La couronne B1 est fixe, c'est-à-dire immobilisée en rotation. La couronne B2 est par contre montée rotativement et constitue la sortie S du réducteur entraînant directement le tube d'enroulement du volet roulant ou similaire. L'entrée E du réducteur se fait sur le porte-satellites U1U2. Ce porte-satellites peut être entraîné par tout moyen manuel d'entraînement ou de manoeuvre, tel que chaîne, manivelle, etc.

Dans un exemple de réalisation de ce premier mode d'exécution, les éléments du réducteur présentent les caractéristiques suivantes :
- planétaire A1 : 11 dents
- satellites a1 : 8 dents
- couronne B1 : 28 dents
- planétaire A2 : 7 dents
- satellites a2 : 11 dents
- couronne B2 : 29 dents
m = 0,62 pour A1, a1, B1 et Dp (B1) = 17,36
m = 0,53 pour A2, a2, B2 et Dp (b2) = 14,84
pour un rapport de réduction égal à 2,59.

Dans le second mode de réalisation représenté à la figure 2, on retrouve les deux trains planétaires simples A1, B1, a1 et A2, B2, a2 et les deux planétaires A1 et A2 sont à nouveau liés mécaniquement de manière à tourner à la même vitesse. La couronne B1 du premier train planétaire est à nouveau fixe. Le porte-satellites U1 des satellites a1 du premier train est solidaire de la couronne B2 du second train et la sortie du réducteur se fait par le porte-satellites U'2 du second train.

Dans un exemple de réalisation de ce second mode d'exécution, les éléments du réducteur présentent les caractéristiques suivantes :
- planétaire A1: 7 dents
- satellites a1: 9 dents
- couronne B1: 26 dents
- planétaire A2: 8 dents
- satellites a2: 10 dents
- couronne B2: 28 dents
m = 0,66 pour A1, a1, B1 et Dp (B1) = 17,16
m = 0,53 pour A2, a2, B2 et Dp (B2) = 14,84 pour un rapport de réduction égal à 2,58.

## Revendications

1. Dispositif d'entraînement manuel de store, volet roulant ou similaire équipé d'un arbre d'enroulement, comprenant un réducteur épicycloïdal entre un moyen d'entraînement manuel et l'arbre d'enroulement du store, **caractérisé en ce que** le réducteur épicycloïdal est constitué de la juxtaposition de deux trains planétaires simples de type I (A1, B1, a1, / A2, B2, a2) dont les planétaires (A1, A2) sont liés mécaniquement de manière à être entraînés simultanément à la même vitesse et dont la couronne (B1) du premier train planétaire, côté entrée du réducteur, est fixe et l'autre couronne (B2) est rotative, et **en ce qu'**il présente un rapport de réduction inférieur ou égal à 3.

2. Dispositif d'entraînement selon la revendication 1, **caractérisé en ce que** les satellites (a1, a2) des deux trains sont portés par un porte-satellites commun constituant l'entrée du réducteur et que la couronne (B2) du second train planétaire constitue la sortie du réducteur.

3. Dispositif d'entraînement selon la revendication 1, **caractérisé en ce que** le porte-satellites (U1) du premier train planétaire est solidaire de la couronne (B2) du second train planétaire et que le porte-satellites (U'2) du second train constitue la sortie du réducteur, l'entrée du réducteur s'opérant sur les planétaires (A1, A2).

## Claims

1. A drive device for manually driving a blind, roller shutter or the like equipped with a winding shaft, comprising an epicyclic reduction gearbox between a manual driving means and the winding shaft of the blind, **characterised in that** the epicyclic gearbox consists of the juxtaposition of two simple planetary gear trains of type I (A1, B1, al,/A2, B2, a2), the sun wheels (A1, A2) of which are mechanically linked so as to be driven simultaneously at the same speed and the annulus gear (B1) of the first planetary gear train of which, on the input side of the reduction gearbox, is fixed and the other annulus gear (B2) of which can rotate, and **in that** the device has a reduction ratio less than or equal to 3.

2. The drive device as claimed in claim 1, **characterised in that** the planet pinions (al, a2) of the two gear trains are carried by a common planet carrier constituting the input of the reduction gearbox and **in that** the annulus gear (B2) of the second planetary gear train constitutes the output of the reduction gearbox.

3. The drive device as claimed in claim 1, **characterised in that** the planet carrier (U1) of the first planetary gear train is secured to the annulus gear (B2) of the second planetary gear train and **in that** the planet carrier (U'2) of the second gear train constitutes the output of the reduction gearbox, the input to the reduction gearbox being on the sun wheels (A1, A2).

## Patentansprüche

1. Vorrichtung zum handbetätigten Antrieb einer Jalousie, eines Rolladens oder einer ähnlichen Einrichtung, die mit einer Aufrollwelle ausgerüstet ist, welche ein epizykloidisches Reduziergetriebe aufweist, das zwischen einem handbetätigten Antriebsmittel und der Aufrollwelle der Jalousie eingebaut ist, **dadurch gekennzeichnet, dass** das epizykloidische Reduziergetriebe aus der eng benachbarten Anordnung zweier einfacher Planetengetriebe des Typs I (A1, B1, a1 / A2, B2, a2) besteht, deren Zentralräder (A1, A2) mechanisch miteinander verbunden sind, so dass sie gleichzeitig und mit der gleichen Geschwindigkeit angetrieben werden, und bei denen das Hohlrad (B1) des ersten Planetengetriebes, welches an der Antriebsseite des Reduziergetriebes liegt, ortsfest ist und das andere Hohlrad (B2) drehbar gelagert ist, und wobei das Getriebe eine Untersetzung gleich oder kleiner als 3 aufweist.

2. Vorrichtung zum Antrieb gemäss Anspruch 1, **dadurch gekennzeichnet, dass** die Planetenräder (al, a2) der beiden Getriebeteile an einem gemeinsamen Planetenträger angeordnet sind, der die Antriebsseite des Reduziergetriebes bildet, und dass das Hohlrad (B2) des zweiten Teils des Planetengetriebes die Abtriebsseite des Reduziergetriebes darstellt.

3. Vorrichtung zum Antrieb nach Anspruch 1, **dadurch gekennzeichnet, dass** der Planetenträger (U1) des ersten Teiles des Planetengetriebes ein Teil des Hohlrades (B2) des zweiten Teils des Planetengetriebes ist, und dass der Planetenträger (U"2) des zweiten Getriebeteils die Abtriebsseite des Reduziergetriebes darstellt, wobei die Antriebsseite des Reduziergetriebes von den Zentralrädern (A1, A2) wahrgenommen wird.
